# EUROPEAN PATENT APPLICATION

(11) **EP 4 734 496 A1**
(43) Date of publication of application: **29.04.2026**
(21) Application number: 25209328.1
(22) Date of filing: 17.10.2025
(51) Int. Cl.: H04N 1/00, G03G 15/00, G06F 1/3234, G06F 3/12

(54) **IMAGE PRINTING APPARATUS, CONTROL METHOD OF IMAGE PRINTING APPARATUS, AND PROGRAM**

(30) Priority: 22.10.2024 JP 2024185937
(71) Applicant: Canon Kabushiki Kaisha, Tokyo, 146-8501 (JP)
(72) Inventor: GENDA, Yasuhisa, Tokyo (JP)
(74) Representative: WESER & Kollegen Patentanwälte PartmbB

(57) **Abstract**

An image printing apparatus (100) comprising: a first processing unit to execute processing for transitioning the image printing apparatus to a power saving state with the power of the image printing apparatus kept on, based on a non-operating time period for which the image printing apparatus has been in a non-operating state and information indicating whether or not the image printing apparatus in the non-operating state is in a predetermined state (201,S404,S405); a second processing unit to execute processing for automatically turning off the power of the image printing apparatus from the power saving state, based on the non-operating time period of the image printing apparatus (201, S404,S405,S407,S408); and a third processing unit to execute processing for automatically turning off the power of the image printing apparatus from a state other than the power saving state, based on the non-operating time period of the image printing apparatus (201, S404,S407,S408).

## Description

### TECHNICAL FIELD

The present disclosure relates to an image printing apparatus, a control method of an image printing apparatus, and a program.

### BACKGROUND

Some image printing apparatuses have a function of automatically transitioning to a sleep state, which is a power saving mode in which power supply to the image printing apparatus main unit is limited while maintaining the power-on state, in a case where the apparatus has not operated continuously for a preset time period.

Japanese Patent Laid-Open No. 2014-73604 discloses an image printing apparatus that does not automatically transition to a sleep state in a case where a blocking factor has occurred, even with the setting for automatically transitioning to the sleep state. Further, Japanese Patent Laid-Open No. 2014-73604 describes an auto shutdown that stops power supply to the entire image printing apparatus.

With an image printing apparatus that has a function of automatically transitioning to a sleep state and an auto shutdown (automatic power-off) function that automatically turns off the power, power saving can be expected.

### SUMMARY

In the image forming apparatus of Japanese Patent Laid-Open No. 2014- 73604, the blocking factors that limit the transition to auto-shutdown are the same as the blocking factors that limit the transition to a sleep state. Therefore, if a blocking factor that limits the transition to the sleep state has occurred, not only is the transition to the sleep state automatically performed, but the power will also not be turned off for a long period of time. Therefore, it may be impossible to suppress the power consumption of the image printing apparatus.

The present disclosure in its first aspect provides an image printing apparatus as specified in claim 1. Optional features are specified in claim 2 to 13.

The present disclosure in its second aspect provides a control method of an image printing apparatus as specified in claim 14.

The present disclosure in its third aspect provides program as specified in claim 15.

According to the present disclosure, it is possible to suppress the power consumption of an image printing apparatus.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating the outer appearance of an image printing apparatus.
Fig. 2 is a block diagram illustrating a configuration of controlling the image printing apparatus.
Fig. 3A to Fig. 3C are diagrams illustrating an example of a power saving setting screen.
Fig. 4 is a flowchart for describing an example of the power control processing.
Fig. 5 is a flowchart for describing an example of the power control processing.
Fig. 6 is a flowchart for describing an example of the power control processing.
Fig. 7 is a diagram illustrating an example of limiting factors.

### DESCRIPTION OF THE EMBODIMENTS

Hereinafter, a description is given of embodiments of the technology of the present disclosure. The following embodiments are not intended to limit the technology of the present disclosure according to the scope of the patent claims, and all combinations of the characteristics explained in the present embodiments are not necessarily essential to the solution provided as the technology of the present disclosure.

### <First Embodiment>

There are image printing apparatuses that automatically transition to a power saving mode (referred to as a sleep state) by limiting power supply to the image printing apparatus main unit while maintaining the power-on state. Further, there is a method of controlling an image printing apparatus so as not to automatically transition to the sleep state in a case where it is detected that a factor indicating that an operation of the image printing apparatus is expected (referred to as a limiting factor or a blocking factor) has occurred. For example, in order to transition to the sleep state from a state in which a limiting factor for automatic sleep-transition has occurred, it is necessary for the user to perform an operation such as giving an instruction to transition to the sleep state or manually canceling the limiting factor for automatic sleep-transition.

Further, there are image printing apparatuses that have an automatic power-off function for automatically turning off the power in order to achieve further power saving than in a sleep state. In an image printing apparatus in which such an automatic power-off function is enabled, if the continuous time period in the sleep state exceeds a set time period for the automatic power-off, the power of the image printing apparatus is automatically turned off. Therefore, in a case where a limiting factor for automatic sleep-transition has occurred, the image printing apparatus does not transition to the sleep state without a user operation, and as a result, there may be a case where the power will not be turned off even though the automatic power-off function is enabled.

Therefore, in the present embodiment, a description is given of a method of controlling an image printing apparatus such that the power will be automatically turned off even in a case where a limiting factor for automatic sleep-transition has continuously occurred for a predetermined time period.

### (Configurations of the Apparatus)

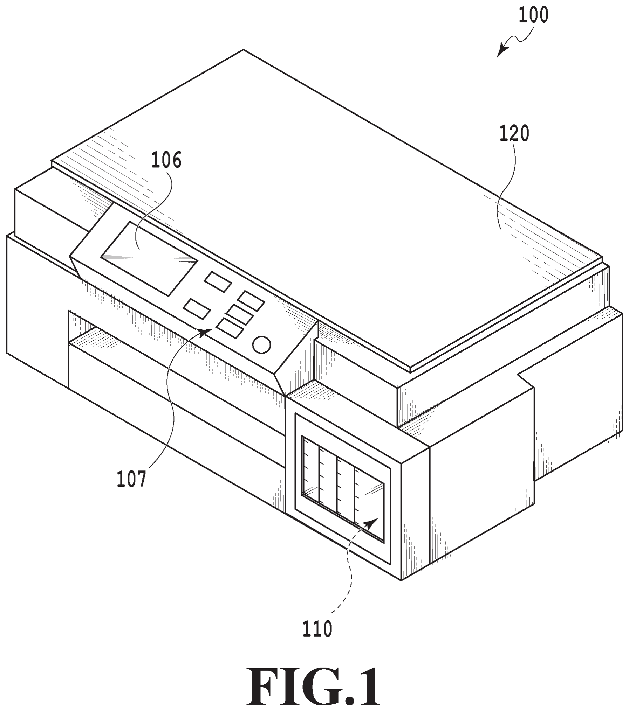

Fig. 1 is a schematic diagram illustrating an example of the outer appearance of the printer 100, which is an image printing apparatus of the present embodiment. The printer 100 includes the display unit 106, the operation unit 107, and the ink tank unit 110. The display unit 106 is configured with a liquid crystal display device, etc., for example, and is capable of displaying characters, figures, indexes (indicators), and the like. The ink tank unit 110 stores ink. The ink tank unit 110 has an ink filling port (not illustrated in the drawings). Ink can be filled into the ink tank unit 110 from an ink bottle (not illustrated in the drawings).

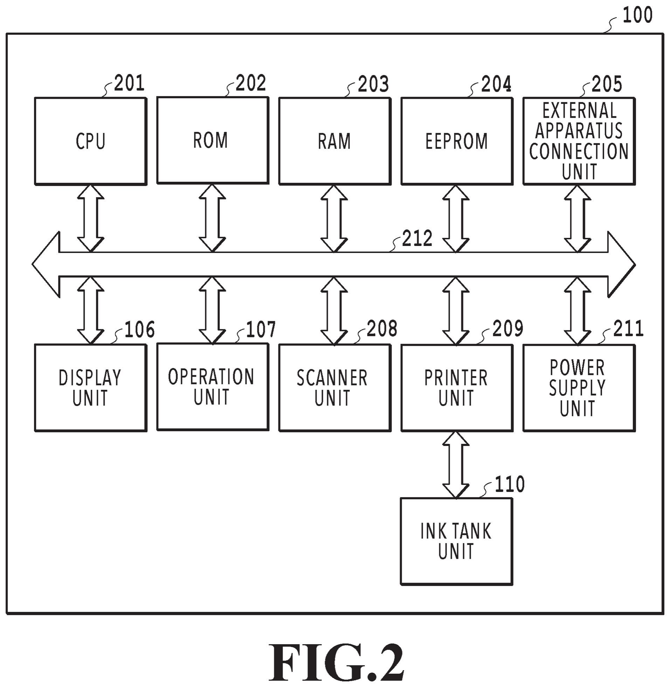

Fig. 2 is a block diagram illustrating an example of the hardware configuration related to the control of the printer 100. The printer 100 includes the CPU 201, the ROM 202, the RAM 203, the EEPROM 204, and the external apparatus connection unit 205.

The CPU 201 is a central processing unit for controlling each unit in the printer 100, and the ROM 202 is a storage unit that stores fixed data such as a control program to be executed by the CPU 201, a data table, and an embedded operating system (OS) program. In the present embodiment, each control program stored in the ROM 202 is used for the control of executing software such as scheduling, task switching, or interruption processing, which is performed under the control of the embedded OS stored in the ROM 202.

The RAM 203 temporarily stores image data and the like and performs buffering at the time each service is executed. The EEPROM 204 stores non-volatile information. The non-volatile information includes shipping destination information of the printer 100, language settings to be displayed on the display unit 106, and setting values registered by the user. The setting values stored in the EEPROM 204 include the value of a sleep timer, which is the set time period for the automatic sleep-transition, and the set time period for the automatic power-off.

The external apparatus connection unit 205 connects to an external apparatus via a USB or a network. That is, the external apparatus connection unit 205 connects to a USB or a network, and communicates with an external apparatus or an external memory such as a USB memory. The RAM 203 stores image data and the like received via the external apparatus connection unit 205.

The printer 100 further includes the power supply unit 211, the scanner unit 208, and the printer unit 209. The scanner function of the printer 100 is implemented by the scanner unit 208, and the printing function is implemented by the printer unit 209.

The printer unit 209 is a printing unit that prints an image on a print medium such as printing paper using an inkjet system, based on image data received from the outside, image data obtained by the scanner unit 208 reading an original document, and the like. The printer unit 209 has an inkjet head, which is a print head that prints an image using the inkjet system. Note that the printing system of the printer unit 209 is not limited to the inkjet system. The printer unit 209 also manages ink information of the ink tanks, including information on the ink remaining amounts, and printing paper information, including information on the number of sheets loaded. The ink tank unit 110 supplies ink to an inkjet head via a tube.

The scanner unit 208 optically reads an original document set on the platen glass 120, converts the original document into digital data, and converts the digital data into a designated file format, thereby generating image data of the original document. Further, the scanner unit 208 transmits the image data of the original document to an external apparatus via a network, or stores it in a storage unit such as an HDD. To implement the copying function, image data generated by reading an original document placed on the platen glass 120 using the scanner unit 208 is transferred to the printer unit 209, and the printer unit 209 prints an image on a print medium, based on the image data.

The power supply unit 211 is connected to an external power source and supplies power to each unit in the printer 100. If the CPU 201 executes a power control program stored in the ROM 202 to transition to the sleep state (sleep mode), the power supply to some of the units illustrated in Fig. 2, such as the scanner unit 208, the printer unit 209, and the display unit 106, is limited. Further, if the printer 100 executes the automatic power-off function, the power supply to the entire printer 100, i.e., to each unit illustrated in Fig. 2, is stopped.

The sleep state is a state in which the power is on but the amount of power supplied to each unit is limited, thereby achieving a power saving mode. For example, the power supply to each unit constituting the printer 100 is made controllable, and, at the time of transitioning to the sleep state, the power supply is limited by cutting off or reducing the power supply to predetermined units. For example, in the sleep state, the power supply to at least one of the printer unit 209, the scanner unit 208, the display unit 106 of the display panel, etc., is stopped or reduced. The power supply to the operation unit 107 is reduced by supplying power only to the key control and LED lamps. The power supply to the CPU 201 is reduced by changing the connection to a circuit that operates at a lower voltage than normal. The power supply to each storage unit is also reduced by changing the connection to a circuit that operates at a lower voltage than normal after starting it in a self-refresh mode. A method of transitioning to the sleep state may be implemented by using these alone or in combination.

The above-described units are connected to each other via the bus 212, and are thus capable of sending and receiving data with each other. Note that, although the image printing apparatus is described as the printer 100 that is a multifunction peripheral by way of example in the present embodiment, the apparatus applicable to the present embodiment is not limited to an image printing apparatus such as the printer 100, and may instead be another image forming apparatus or an ink ejection apparatus. For example, it is also possible to use a copier or a facsimile, or use a printer that is not equipped with a scanner function.

### [About the Automatic Sleep-transition Setting and the Automatic Power-off Setting]

The printer 100 of the present embodiment has, as settings for power saving, automatic sleep-transition in which transitioning to the sleep state is automatically performed if a certain condition is satisfied, and automatic power-off in which the power is automatically turned off if a certain condition is satisfied.

In a case where the automatic sleep-transition is enabled, the printer 100 automatically transitions to the sleep state if the printer 100 has not been operating continuously for a preset time period for the automatic sleep-transition, which is set by the user. Note that, even in a case where the printer 100 of the present embodiment has not been operating continuously for the preset time period for the automatic sleep- transition, the printer 100 is controlled so as not to automatically transition to the sleep state in a case where a limiting factor for the automatic sleep-transition has occurred.

In a case where the automatic power-off is enabled, the power of the printer 100 is automatically turned off in a case where the time period indicated by an automatic power-off determination counter exceeds a preset time period for the automatic power-off. There is a case in which the automatic power-off determination counter of the present embodiment counts a time period even though the printer 100 is not in the sleep state. Therefore, in the printer 100 of the present embodiment, if the automatic power-off setting is selected as enabled, it is possible to automatically turn off the power of the printer 100 even in a case where the printer 100 is not in the sleep state.

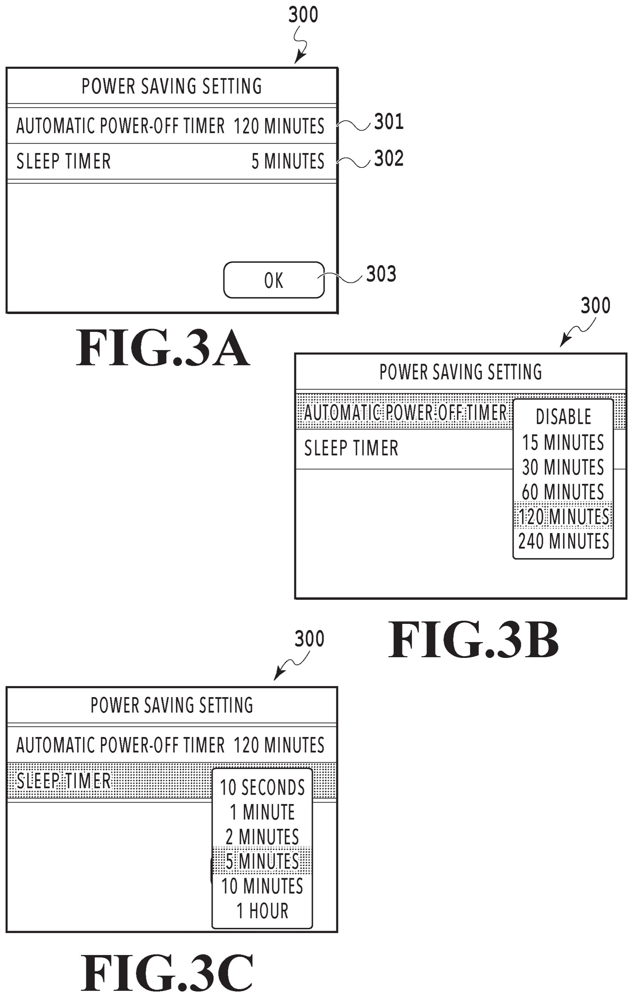

Fig. 3A to Fig. 3C are diagrams illustrating an example of the power saving setting screen 300 for setting each power saving mode of the printer 100. The power saving setting screen 300 is displayed on the display unit 106 of the printer 100 at the time the user performs a predetermined operation. As illustrated in Fig. 3A, the power saving setting screen 300 of the present embodiment includes two setting areas: the automatic power-off setting area 301 and the automatic sleep-transition setting area 302. The OK button 303 is a button for giving an instruction indicating that the user has completed each setting.

The automatic power-off setting area 301 is an area for the user to select whether to enable or disable the automatic power-off setting. If the user selects a set time period for the automatic power-off from the automatic power-off setting area 301, the automatic power-off setting is enabled. If the user presses the automatic power-off setting area 301, six options are displayed as illustrated in Fig. 3B: "DISABLE," "15 MINUTES," "30 MINUTES," "60 MINUTES,"" 120 MINUTES," and "240 MINUTES." "DISABLE" is an option for selecting to disable the automatic power-off setting. "15 MINUTES," "30 MINUTES," "60 MINUTES," "120 MINUTES," and "240 MINUTES" are options for enabling the automatic power-off and selecting a set time period for the automatic power-off. The user can change the automatic power-off setting by pressing an option. The setting value indicating the changed setting is to be stored in the EEPROM 204.

Note that it is also possible to prohibit disabling the automatic power-off setting. That is, the set time period for the automatic power-off may be set to any one of "15 MINUTES," "30 MINUTES," "60 MINUTES," "120 MINUTES," and "240 MINUTES" at the time of shipment. Further, it is also possible that the options displayed at the time the automatic power-off setting area 301 is pressed do not include "DISABLE" which disables the automatic power-off.

The automatic sleep-transition setting area 302 is an area for changing the set time period for the automatic sleep-transition. If the user presses the automatic sleep-transition setting area 302, such options as illustrated in Fig. 3C are displayed. Note that the options for the set time period are not limited to those illustrated in Fig. 3C. The user can change the set time period for the automatic sleep-transition by pressing an option. The changed setting value is to be stored in the EEPROM 204.

In the present embodiment, the automatic sleep-transition is described as not being able to be disabled, but it is also possible to allow the automatic sleep-transition to be disabled. For example, the options displayed at the time the user presses the automatic sleep-transition setting area 302 may include a "DISABLE" option. Then, if the user presses the "DISABLE" option, the automatic sleep-transition may be disabled. That is, the printer 100 may be an apparatus that can be set so that the automatic sleep- transition is disabled and only the automatic power-off is enabled.

In this way, the current setting values for the automatic sleep-transition and automatic power-off are respectively stored in the EEPROM 204. Therefore, if the user gives an instruction to display the power saving setting screen 300, the CPU 201 obtains the setting values from the EEPROM 204 and displays the power saving setting screen 300 reflecting the obtained setting values. In Fig. 3A, "120 MINUTES" is displayed in the automatic power-off setting area 301, which indicates that "120 MINUTES" is stored in the EEPROM 204 as the current set time period for the automatic power-off. Further, "5 MINUTES" is displayed in the automatic sleep-transition setting area 302, which indicates that "5 MINUTES" is stored in the EEPROM 204 as the set time period for the automatic sleep-transition.

### [Flowchart]

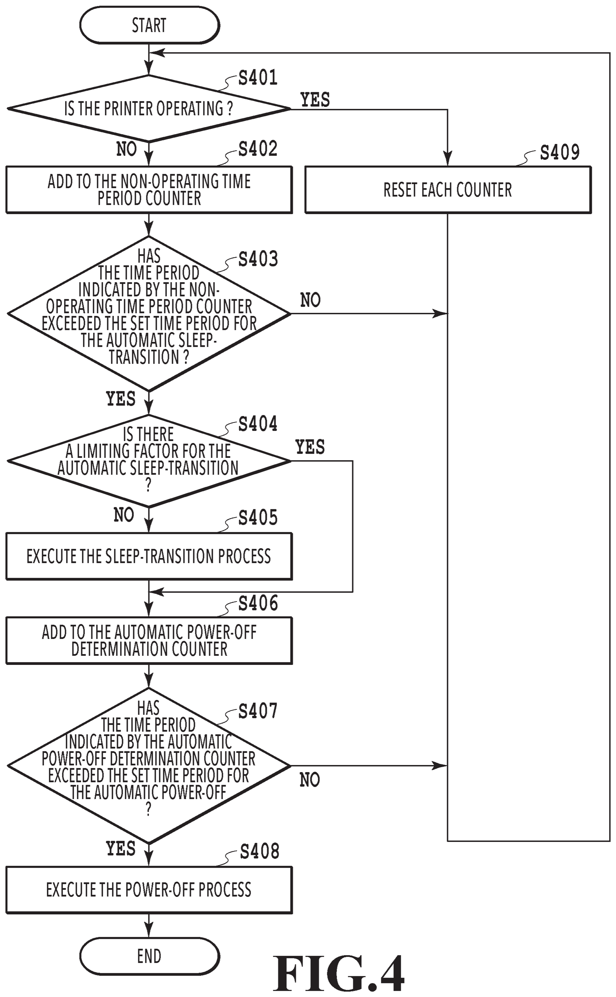

Fig. 4 is a flowchart for describing an example of the power control processing executed by the printer 100 according to the present embodiment. The series of processes illustrated in the flowchart of Fig. 4 is performed by the CPU 201 loading a program code stored in the ROM 202 into the RAM 203 and executing it. Further, part or all of the functions in the steps of Fig. 4 may be implemented by hardware such as an ASIC or an electronic circuit. Note that the symbol "S" in the description of each process indicates that it is a step in the flowchart, and the same applies to the following flowcharts.

The CPU 201 monitors whether the printer 100 is in operation, and in S401, the CPU 201 determines whether or not the printer 100 is in operation. The CPU 201 determines that the printer 100 is in operation if any of the following operations that indicate that the printer 100 is in operation is detected: a job such as printing or scanning is being executed, a user is operating the operation unit 107, or various errors have occurred. That is, the CPU 201 determines that the printer 100 is "not in operation" if none of the operations that indicate that the printer 100 is in operation is detected, e.g., a job such as printing or scanning is not being executed, a user is not operating the operation unit 107, or various errors have not occurred.

If it is determined that the printer 100 is in operation (YES in S401), the CPU 201 proceeds the processing to S409. In S409, the CPU 201 resets the values of the non-operating time period counter and the automatic power-off determination counter to 0, and, if the printer 100 is in the sleep state, the CPU 201 cancels the sleep state. Then, returning to S401, the processing is repeated from S401. The non-operating time period counter and the automatic power-off determination counter are described in detail later.

On the other hand, if it is determined that the printer 100 is not in operation (NO in S401), the CPU 201 proceeds the processing to S402.

In S402, the CPU 201 adds a value to the non-operating time period counter. That is, if the current value of the non-operating time period counter is 0, a value indicating the time period elapsed since the previous reset is added to the non-operating time period counter. Alternatively, if a value has already been added in S402 after the reset, a value indicating the time period elapsed since the previous addition is added to the non-operating time period counter. In this way, the CPU 201 adds a value to the non-operating time period counter or performs a reset so that the value of the non-operating time period counter indicates a time period for which the printer 100 has not been operating continuously (hereinafter referred to as a non-operating time period).

In S403, the CPU 201 determines whether the time period indicated by the non-operating time period counter, which indicates the time period for which the printer 100 has not been operating continuously, exceeds the set time period for the automatic sleep-transition, which is set via the automatic sleep-transition setting area 302.

If it is determined that the time period indicated by the non-operating time period counter has not exceeded the set time period for the automatic sleep-transition (NO in S403), the CPU 201 returns to S401 and repeats the processing from S401.

If it is determined that the time period indicated by the non-operating time period counter has exceeded the set time period for the automatic sleep-transition (YES in S403), the CPU 201 proceeds the processing to S404.

In S404, the CPU 201 determines whether or not a limiting factor, which is a factor that limits the printer 100 from automatically transitioning to the sleep state, has occurred.

One of the limiting factors for the automatic sleep-transition is the state in which the printer 100 is connected to an external device. For example, there may be a case in which an external memory is connected to the printer 100, or a USB is connected to the printer 100. If an external memory is connected, it is expected that the user will use the external memory to perform direct printing or save scanned images, and thus this is set as a limiting factor for the automatic sleep-transition. Alternatively, if a USB is connected, it is expected that the user will operate the printer 100 soon, and thus this is set as a limiting factor for the automatic sleep-transition.

If it is determined that no limiting factor for the automatic sleep-transition has occurred (NO in S404), the CPU 201 proceeds the processing to S405.

In S405, the CPU 201 controls the power supply unit 211 to transition the printer 100 to the sleep state. Then, the processing proceeds to S406. If the printer 100 has already been in the sleep state, the CPU 201 proceeds the processing to S406 while maintaining the sleep state.

On the other hand, if it is determined that a limiting factor for the automatic sleep-transition has occurred (YES in S404), the CPU 201 skips S405 and proceeds the processing to S406 without transitioning to the sleep state. In this way, even in a case where the non-operating time period of the printer 100 has exceeded the set time period for the automatic sleep-transition, if a limiting factor for the automatic sleep-transition has occurred, the printer 100 is controlled not to automatically transition to the sleep state.

In S406, the CPU 201 adds a value to the automatic power-off determination counter. If the current value of the automatic power-off determination counter is 0, the value indicating the time period elapsed since the previous reset is added to the automatic power-off determination counter. Alternatively, if a value has already been added in S406 after the reset, the value indicating the time period elapsed since the previous addition is added to the automatic power-off determination counter.

In this way, the automatic power-off determination counter is a counter that starts counting after the time period for which the printer 100 has not been operating continuously exceeds the set time period for the automatic sleep-transition, and keeps adding a value in a case where the printer 100 is not operating.

In S407, the CPU 201 determines whether the time period indicated by the automatic power-off determination counter has exceeded the set time period for the automatic power-off, which is set via the automatic power-off setting area 301.

If it is determined that the time period indicated by the automatic power- off determination counter has not exceeded the set time period for the automatic power- off (NO in S407), the CPU 201 returns to S401 and repeats the processing from S401. Note that, at the next determination in S404, if it is determined that there is no limiting factor for the automatic sleep-transition, the processing proceeds to S405, where the transition to the sleep state is performed. Even in this case, the automatic power-off determination counter continues counting the time period without being reset.

If it is determined that the time period indicated by the automatic power- off determination counter has exceeded the set time period for the automatic power-off (YES in S407), the CPU 201 proceeds the processing to S408.

In S408, the CPU 201 executes the process of turning off the power of the printer 100. That is, the CPU 201 performs the same process as at the time the user presses the power button on the operation unit 107, so as to turn off the power of the printer 100.

In this way, it can be said that the printer of the present embodiment includes a processing unit that preforms the transition to the sleep state in S405 and then performs the automatic power-off process of S406 to S408, and a processing unit that performs the automatic power-off process of S406 to S408 without performing the transition to the sleep state in S405.

Further, the automatic power-off determination counter of the present embodiment is a counter that measures a time period for which the printer 100 has not been operating continuously after the elapse of the set time period for the automatic sleep- transition. Therefore, if the non-operating time period of the printer 100 exceeds the time period obtained as a sum of the set time period for the automatic sleep-transition and the set time period for the automatic power-off, then the printer 100 is controlled so that the power is automatically turned off regardless of whether the printer 100 is in the sleep state or not. That is, as illustrated in Fig. 3A, assume that the set time period for the automatic power-off is 120 minutes and the set time period for the automatic sleep- transition is 5 minutes. In this case, if the non-operating time period of the printer 100 exceeds 125 minutes, it is determined in S407 as YES, and the printer 100 is controlled so that the power is automatically turned off regardless of whether the printer 100 is in the sleep state or not.

Further, in the present embodiment, if a limiting factor for the automatic sleep-transition is detected in S404, the automatic power-off determination counter starts counting, which is to be compared with the set time period for the automatic power-off. Therefore, the automatic power-off process of S406 to S408 is controlled to be enabled not only in a case where the printer 100 transitions to the sleep state, but also in a case where it is detected that a limiting factor for the automatic sleep-transition has occurred. Thus, if the non-operating time period of the printer 100 exceeds the time period obtained as a sum of the set time period for the automatic sleep-transition and the set time period for the automatic power-off, then the printer 100 is controlled so that the power is automatically turned off even though a limiting factor for the automatic sleep-transition has occurred.

As described above, in the present embodiment, regardless of whether the printer 100 is in the sleep state or not, if a setting condition for the automatic power-off is satisfied, then the printer 100 is controlled so that the power is automatically turned off. Further, even though a limiting factor for the automatic sleep-transition has occurred in the printer 100, the printer 100 is controlled so that the power is automatically turned off if a setting condition for the automatic power-off is satisfied. Therefore, according to the present embodiment, even in a case where the transition to the sleep state is not performed because a limiting factor for the automatic sleep-transition is not resolved, the power can be automatically turned off if the non-operating time period exceeds the set time period for the automatic power-off. Therefore, according to the present embodiment, it is possible to suppress the power consumption of an image printing apparatus.

Note that the printer 100 has the non-operating time period counter, but may not have the automatic power-off determination counter. In this case, the step of S406 may be omitted. Further, in this case, the CPU 201 may determine in S407 whether the time period indicated by the non-operating time period counter exceeds the time period obtained as a sum of the set time period for the automatic power-off and the set time period for the automatic sleep-transition. That is, as illustrated in Fig. 3A, assume that the set time period for the automatic power-off is 120 minutes and the set time period for the automatic sleep-transition is 5 minutes. In this case, if the time period indicated by the non-operating time period counter has exceeded 125 minutes, the CPU 201 may determine YES in S407, and automatically turn off the power of the printer 100 regardless of whether the printer 100 is in the sleep state or not.

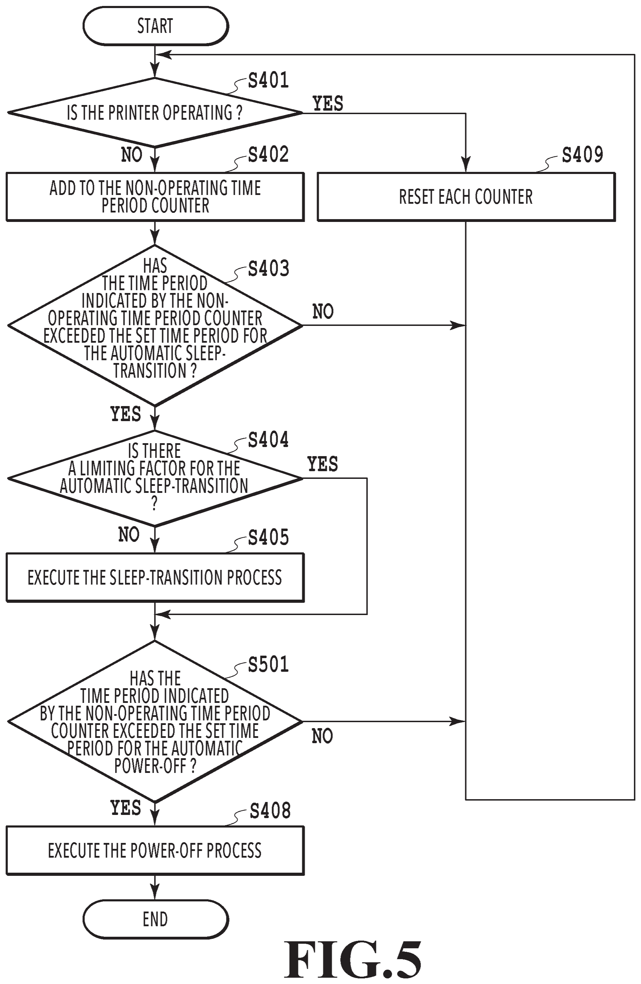

Fig. 5 is a flowchart for describing another example of the processing executed by the printer 100 that has the non-operating time period counter but does not have an automatic power-off determination counter.

In Fig. 5, the same steps as in Fig. 4 are assigned the same step numbers as in Fig. 4. In Fig. 5, S501 is executed instead of S407 in Fig. 4. In S501, if it is determined that the time period indicated by the non-operating time period counter has exceeded the set time period for the automatic power-off (YES in S501), the CPU 201 proceeds the processing to S408. Then, in S408, the CPU 201 executes the process to turn off the power of the printer 100. That is, as illustrated in Fig. 3A, assume that the set time period for the automatic power-off is 120 minutes and the set time period for the automatic sleep-transition is 5 minutes. In this case, if the non-operating time period of the printer 100 exceeds 120 minutes, then it is determined in S501 as YES, and the printer 100 is controlled so that the power is automatically turned off regardless of whether the printer 100 is in the sleep state or not.

In this way, if the non-operating time period of the printer 100 exceeds the time period that is set in the automatic power-off setting area 301 of Fig. 3A, the power of the printer 100 may be automatically turned off regardless of whether the printer 100 is in the sleep state or not. In this case, by making the set time period for the automatic power-off longer than the set time period for the automatic sleep-transition, if there are no limiting factors, it is possible to transition to the sleep state and then turn off the power.

In the image forming apparatus of Japanese Patent Laid-Open No. 2014- 73604, the blocking factors that limit the transition to auto-shutdown are the same as the blocking factors that limit the transition to a sleep state. Therefore, if a blocking factor that limits the transition to the sleep state has occurred, not only is the transition to the sleep state automatically performed, but the power will also not be turned off for a long period of time. Therefore, in Japanese Patent Laid-Open No. 2014-73604, it may be impossible to suppress the power consumption of the image printing apparatus. On the other hand, according to the present disclosure, it is possible to suppress the power consumption of an image printing apparatus.

### <Second Embodiment>

In the present embodiment, a description is given of a method of controlling the power not to be automatically turned off in a case where a limiting factor (a blocking factor) that limits the automatic power-off has occurred. Regarding the present embodiment, the differences from the first embodiment are mainly described. Portions not specifically described are the same in configuration and processing as those in the first embodiment.

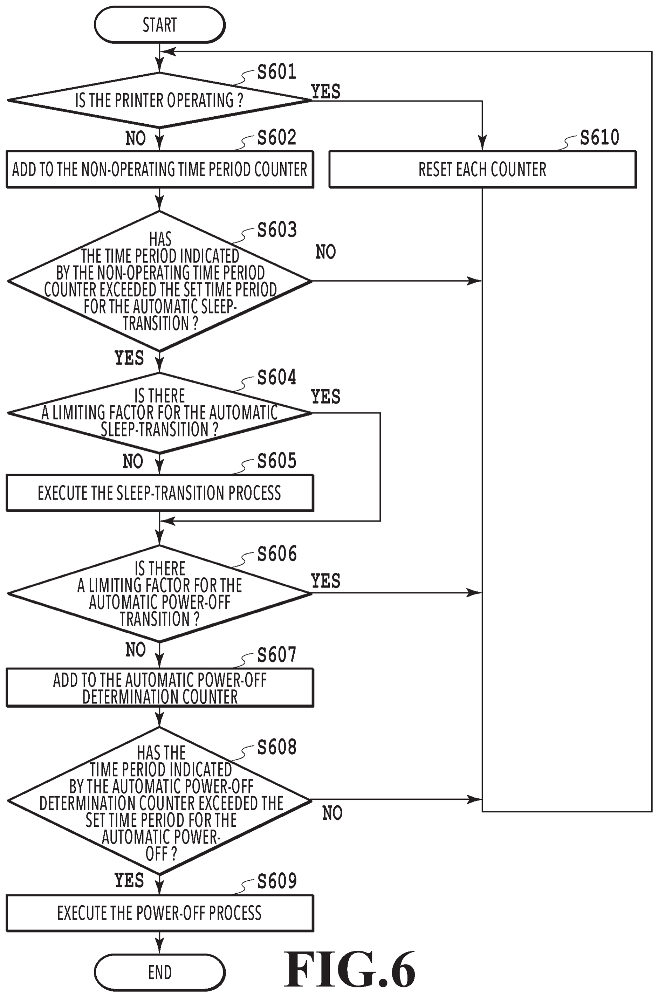

Fig. 6 is a flowchart for describing an example of the power control processing executed by the printer 100 according to the present embodiment. The series of processes illustrated in the flowchart of Fig. 6 is performed by the CPU 201 loading a program code stored in the ROM 202 into the RAM 203 and executing it.

Since S601 to S605 are the same as S401 to S405 in Fig. 4, the descriptions thereof are omitted. In the present embodiment, if the CPU 201 transitions the printer 100 to the sleep state in S605, or if it is determined in S604 that a limiting factor for the automatic sleep-transition has occurred (YES in S604), the processing proceeds to S606.

In S606, the CPU 201 determines whether or not a limiting factor for the automatic power-off, which is a factor for limiting the power from being automatically turned off, has occurred.

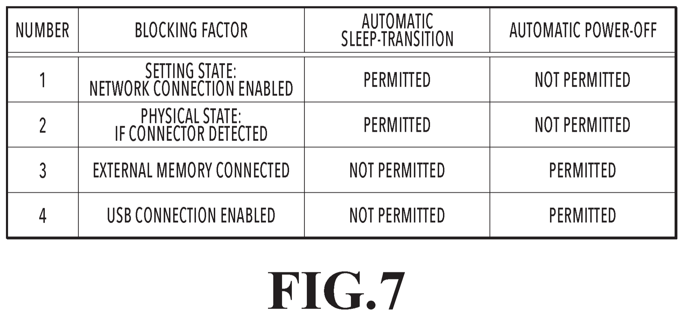

Fig. 7 is a diagram illustrating an example of limiting factors for the automatic power-off. In Fig. 7, the factors with "NOT PERMITTED" held in the "AUTOMATIC POWER-OFF" column indicate that they are limiting factors for the automatic power-off. That is, Fig. 7 illustrates that "NETWORK CONNECTION ENABLED," whose "NUMBER" is 1, and "IF CONNECTOR DETECTED," whose "NUMBER" is 2, are limiting factors for the automatic power-off. Further, in Fig. 7, "EXTERNAL MEMORY CONNECTED," whose "NUMBER" is 3, and "USB CONNECTION ENABLED," whose "NUMBER" is 4, indicate that they are limiting factors for the automatic sleep-transition but not for the automatic power-off. If any one of the limiting factors for the automatic power-off illustrated in Fig. 7 has occurred, it is determined in S606 that a limiting factor for the automatic power-off has occurred.

"IF CONNECTOR DETECTED," which is one of the limiting factors for the automatic power-off illustrated in Fig. 7, means being detected that a connector for a wired network cable is connected. It is used to determine whether a connection to a network has been established. Note that, in order to determine whether a connection to a network has been established, the limiting factors for the automatic power-off may include a factor that indicates that a wireless network is in a connected state, in addition to or instead of "IF CONNECTOR DETECTED."

If it is determined that none of the limiting factors for the automatic power-off has occurred (NO in S606), the CPU 201 performs the processes of S607 to S609. S607 to S609 are the same processes as S406 to S408 in Fig. 4.

On the other hand, if it is determined that a limiting factor for the automatic power-off has occurred (YES in S606), the CPU 201 returns to S601 and repeats the processing from S601. That is, in the present embodiment, during the time a limiting factor for the automatic power-off has occurred, the printer 100 is controlled so that the power will not be automatically turned off.

In the example of Fig. 7, "EXTERNAL MEMORY CONNECTED" is not a limiting factor for the automatic power-off. Therefore, even if the "EXTERNAL MEMORY CONNECTED" state has occurred, it is determined in S606 as NO, and the processes of S607 to S609 are performed in the same manner as in the first embodiment. That is, even if the "EXTERNAL MEMORY CONNECTED" state has occurred, in a case where the time indicated by the automatic power-off determination counter exceeds the set time period, the power of the printer 100 will be automatically turned off.

On the other hand, if the setting state is "NETWORK CONNECTION ENABLED" or the physical state is "IF CONNECTOR DETECTED," which are limiting factors for the automatic power-off, the automatic power-off is not permitted regardless of whether an external memory is connected or not. Therefore, while the printer 100 is connected to the network, even if the user enables the automatic power-off setting via the power saving setting screen 300, the printer 100 is controlled so that the power will not be automatically turned off.

For example, there is a possibility that the printer 100 of the present embodiment receives a job, such as a print job, from an external apparatus via a network. However, if the printer 100 is turned off, it is no longer possible to receive jobs. Therefore, in order to maintain the state where the printer 100 is able to receive jobs, factors such as "NETWORK CONNECTION ENABLED" and "IF CONNECTOR DETECTED," which indicate that the printer 100 is connected to a network, are set as limiting factors for the automatic power-off. On the other hand, in the present embodiment, the CPU 201 controls each unit so that the printer 100 can receive a job from an external apparatus even in the sleep state, and, if a job is received in the sleep state, the sleep state is cancelled and the job is executed. In this way, since the printer 100 of the present embodiment can receive jobs from external apparatuses via a network even in the sleep state, "NETWORK CONNECTION ENABLED" and "IF CONNECTOR DETECTED" are not set as limiting factors for the automatic sleep-transition.

As described above, according to the present embodiment, even if the automatic power-off setting is enabled, the power will not be automatically turned off in a state where a specific factor has occurred.

### <Other Embodiments>

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above- described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

Various embodiments have been described in detail above but it will be understood that the present disclosure is not limited to these embodiments and encompasses all modifications, variants, alternatives and equivalents falling within the scope of the appended claims.

## Claims

1. An image printing apparatus (100) comprising:
a first processing unit configured to execute processing for transitioning the image printing apparatus to a power saving state with the power of the image printing apparatus kept on, based on a non-operating time period for which the image printing apparatus has been in a non-operating state and information indicating whether or not the image printing apparatus in the non-operating state is in a predetermined state (201, S404, S405);
a second processing unit configured to execute processing for automatically turning off the power of the image printing apparatus from the power saving state, based on the non-operating time period of the image printing apparatus (201, S404, S405, S 407, S408); and
a third processing unit configured to execute processing for automatically turning off the power of the image printing apparatus from a state other than the power saving state, based on the non-operating time period of the image printing apparatus (201, S404, S407, S408).

2. The image printing apparatus according to claim 1, wherein
the predetermined state is a state of being connected to an external device, and
in a case where the non-operating time period of the image printing apparatus exceeds a first time period and the image printing apparatus is not connected to the external device, the first processing unit executes the processing for transitioning the image printing apparatus to the power saving state.

3. The image printing apparatus according to claim 2, wherein
the state of being connected to the external device includes at least one of a state in which an external memory is connected to the image printing apparatus and a state in which a USB is connected to the image printing apparatus.

4. The image printing apparatus according to claim 2 or 3, wherein
in a case where the non-operating time period in the state other than the power saving state of the image printing apparatus exceeds a sum of the first time period and a second time period different from the first time period, the third processing unit executes the processing for automatically turning off the power of the image printing apparatus.

5. The image printing apparatus according to claim 2 or 3, wherein
in a case where the non-operating time period in the state other than the power saving state of the image printing apparatus exceeds a second time period which is longer than the first time period, the third processing unit executes the processing for automatically turning off the power of the image printing apparatus.

6. The image printing apparatus according to any one of claims 1 to 5, wherein
in a case where the image printing apparatus is in a specific state different from the power saving state, the third processing unit and the second processing unit do not execute the processing for turning off the power of the image printing apparatus.

7. The image printing apparatus according to claim 6, wherein
the specific state includes at least a state in which the image printing apparatus is connected to a network.

8. The image printing apparatus according to claim 7, wherein
the state of being connected to a network is a state in which network connection is enabled as a setting state of the image printing apparatus or a state in which an IF connector is connected to the image printing apparatus.

9. The image printing apparatus according to any one of claims 6 to 8, wherein
the specific state is different from the predetermined state.

10. The image printing apparatus according to any one of claims 2 to 5, wherein
in a case where the non-operating time period of the image printing apparatus exceeds a second time period different from the first time period and the image printing apparatus is in the power saving state, the second processing unit turns off the power of the image printing apparatus.

11. The image printing apparatus according to any one of claims 2 to 5, wherein,
in a case where the non-operating time period of the image printing apparatus exceeds the first time period, the image printing apparatus is controlled so that the processing by the third processing unit becomes enabled.

12. The image printing apparatus according to any one of claims 1 to 11 further comprising
a printing unit configured to print an image, wherein
the power saving state is a sleep state in which at least power supply to the printing unit is limited.

13. The image printing apparatus according to claim 12, wherein
the printing unit prints an image using an inkjet system.

14. A control method of an image printing apparatus (100), the control method comprising:
executing processing for transitioning the image printing apparatus to a power saving state with the power of the image printing apparatus kept on, based on a non-operating time period for which the image printing apparatus has been in a non-operating state and information indicating whether or not the image printing apparatus in the non-operating state is in a predetermined state (S404, S405);
executing processing for automatically turning off the power of the image printing apparatus from the power saving state, based on the non-operating time period of the image printing apparatus (S404, S405, S407, S408); and
executing processing for automatically turning off the power of the image printing apparatus from a state other than the power saving state, based on the non-operating time period of the image printing apparatus (S404, S407, S408).

15. A program for causing a computer to execute each of the units of the image printing apparatus according to any one of claims 1 to 13.
